# DEMANDE DE BREVET EUROPEEN

(11) **EP 2 604 127 A2**
(43) Date de publication de la demande: **19.06.2013**
(21) Numéro de dépôt: 12364006.2
(22) Date de dépôt: 12.12.2012
(51) Int. Cl.: A23L 1/105, A23C 11/10, A23L 1/10, A23L 1/187, A23L 1/19, A23L 1/211, A23L 1/30

(54) **Substitut végétal du yaourt**

(30) Priorité: 13.12.2011 FR 1103836
(71) Demandeur: Favrot, Christophe, 29690 La Feuillée (FR); Mouillot, Nathalie, 29690 La Feuillée (FR)
(72) Inventeur: Favrot, Christophe, 29690 La Feuillée (FR); Mouillot, Nathalie, 29690 La Feuillée (FR)

(57) **Abrégé**

La présente invention concerne un produit à base de graines -à l'exclusion de la graine de soja- et d'eau , fermenté par des bactéries lactiques et dont l'aspect, le goût et la texture finale se rapprochent de très près de celle d'un yaourt brassé, ce qui en fait un substitut du yaourt laitier, entièrement naturel. Sa composition ne contient aucun additif exogène à la graine employée, en particulier aucun texturant, ce qui élimine les sources de contamination croisée d'allergènes. La présente invention concerne également le procédé qui conduit à ce produit.

Le procédé permettant la fabrication d'un tel substitut de yaourt, se réalise par mélange de l'eau et de farine ou de graines et dans ce cas suivi d' un broyage des graines dans l'eau, suivi d'une gélatinisation partielle de l'amidon texturante par élévation de la température au point de gélatinisation, d'un ensemencement par des bactéries lactiques sélectionnées amylolytiques et ou productrice d'exo-polysaccharides et d'une acidification et texturation par voie fermentaire.

Grâce au grand choix de graines utilisé et à l'extrème simplicité de la formulation, l'invention est adaptée aux personnes allergiques à certaines substances végétales. Par exemple le substitut de yaourt au sarrasin est adapté aux personnes allergiques au gluten.

La présente invention concerne également le procédé qui conduit à ce produit ainsi que les dérivés de ce produit telle que les boissons, sauces, glace ou crème glacée issue totalement ou partiellement de ce substitut de yaourt. Plus précisément, la présente invention couvre toute utilisation du substitut de yaourt à base de graine comme ingrédient alimentaire.La présente invention concerne également une machine permettant la fabrication du substitut végétal du yaourt selon le procédé décrit et spécialement conçue dans le but d'éviter la contamination croisée par les allergènes.

## Description

La présente invention concerne un produit à base de graines -à l'exclusion de la graine de soja- et d'eau , fermenté par des bactéries lactiques et dont l'aspect, le goût et la texture finale se rapprochent de très près de celle d'un yaourt brassé, ce qui en fait un substitut du yaourt laitier, entièrement naturel. Sa composition ne contient aucun additif exogène à la gaine employée, en particulier aucun texturant, ce qui élimine les contamination croisées d'allergènes. Le produit peut contenir une proportion d'éléments natifs de la graine crue, c'est à dire des molécules non dénaturées.La présente invention concerne également le procédé qui conduit à ce produit ainsi que les dérivés de ce produit telle que les boissons, sauces, glace ou crème glacée issue totalement ou partiellement de ce substitut de yaourt. Plus précisément, la présente invention couvre toute utilisation du substitut de yaourt à base de graine comme ingrédient alimentaire.La présente invention concerne également une machine permettant la fabrication du substitut végétal du yaourt selon le procédé décrit et spécialement conçue dans le but d'éviter la contamination croisée par les allergènes.

Dans le monde, la fermentation de produits végétaux et plus précisément de fractions de végétaux (racines, graines, fibres) par des bactéries lactiques est très largement pratiquée et documentée. Pour ne citer qu'eux, des exemples à base de maïs (pozol, Mexique; ogi, Afrique de l'Ouest), de mil (koko , Afrique de l'Ouest), de sorgho (gowé, Afrique de l'Ouest), de manioc (fufu, Afrique de l'Ouest) sont connus. Ce sont des pâtes amylacées de forte viscosité et leur texture est incompatible avec celle d'un substitut du yaourt.

La fermentation de fibres végétales par les bactéries lactiques est exploitée pour la fabrication d' un produit commercialisé à base de fibre d'avoine (Avenly) protégé jusqu' en 2011 par le brevet WO 9117672. La principale revendication de ce brevet est la transformation fermentaire des fibres d'avoine pour les rendre plus comestibles , et ne se superpose donc pas à la présente invention. Un autre brevet existe dans ce domaine (WO 2005/011403) dont la principale revendication est la valorisation des fibres végétales comme ingrédient alimentaire et ne se superpose pas à la présente invention.

Par ailleurs, il est de forte notoriété qu' une spécialité végétale au soja est obtenue par fermentation de jus de soja à l'aide de *Lactobacillus acidophilus* et du de bactéries du genre *Bifidobacterium.* Ce produit , plus communément connu sous le nom de "yaourt de soja" (quoique dénomination inadéquate) est consommé en Europe comme substitut du yaourt laitier: les consommateurs souffrant d'allergies recherchent en effet des sources alimentaires leur évitant le contact avec les allergènes, en particulier le lactose.. Néanmoins, la présente invention excluant le soja , graine par ailleurs riche en composés proches des hormones sexuelles et donc perturbant le cycle hormonal humain, le produit à base de soja ne constitue pas une antériorité.

Le produit Yosa (Finlande) est présenté comme un "yaourt" d'avoine.

Or, ce produit, se revendiquant comme un substitut de yaourt, contient néanmoins des épaississants (xanthane,pectine ,agar) pour stabiliser sa texture, ce qui est n'est pas le cas pour le yaourt laitier , ni pour la spécialité végétale à base de jus de soja.

Le brevet WO2007011685 relatif à l'extraction des composés du grain de riz pour fabriquer une suspension homogène et nutritive, ne prévoit pas sa transformation de cette suspension en substitut de yaourt. Cependant, ce brevet est cité comme base de la gamme Ricera déclinant des « rice yogourt » aromatisés. Là encore le fabriquant utilise des adjuvants gélifiants tels que la pectine et la graine de caroube pour obtenir la texture désirée.

Le brevet EP0853889 décrit aussi la fabrication d'un produit de substitution de produit laitier, à base d'amidon. Là encore, l'invention citée prévoit nécessairement un émulsifiant d'origine exogène à la source d'amidon. Il est par ailleurs cité dans ce brevet que l'addition d'ingrédients d'origine animale tel que le lait améliore le goût et la texture du produit fermenté.

En conclusion, mis à part dans le cas du produit de substitution du yaourt à base de soja , dont la texture est principalement due à la précipitation au point isoélectrique de la protéine de soja du fait de l'acidification par fermentation , aucun autre produit de substitution du yaourt à base de graine (riz , avoine) ou d'amidon n'obtient sa texture par la fonctionnalité des composants propres et par l'acidification, comme ce serait le cas pour un yaourt laitier : tous utilisent soient des épaississants soient des émulsifiants exogènes.

L'explication pour ces ajouts de texturant tient à l'insolubilité dans l'eau des protéines de réserves des graines. Ainsi il est connu que les prolamines (ex orzénines du riz, gliadines du blé) ne sont solubles que dans l'alcool à 70% et les gluténines dans les alcalins ou les acides,. En conséquence, la fonctionalité des protéines céréalières en milieu aqueux est très limitée, et cela explique la difficulté majeure rencontrée pour l'obtention d'une texture visco-élastique par simple acidification, contrairement à ce qui se passe dans le lait et dans le jus de soja : Les protéines isolées du soja , sont en effet , quant à elles, comme les micelles de caséines, solubles dans l'eau et très réactives au pH.

L'ajout de composés exogènes à l'espèce revendiquée dans la composition du produit augmente considérablement les risques de contamination croisée, rendant la production de produits alimentaires exempts d'allergènes plus complexe et coûteuse.

Par ailleurs le choix de végétaux révendiqués actuellement utilisés pour ces substituts ne concerne actuellement pas d'autres graines à part celle du soja, du riz et de l'avoine.

Il est d'autre part connu, grâce aux travaux de Paul Kouchakoff de l'institut de chimie clinique de Lausanne, Suisse (« the influence of food cooking on the blood formula of man, Proceedings, first international congress of microbiology, Paris , 1930) que la consommation de produits alimentaires cuits provoque une hyperleucocytose intestinale, c'est à dire une réaction inflammatoire. Les céréales qui sont des sources de sucres lents, de protéines, de vitamines,et de minéraux sont habituellement consommées sous forme cuite.Elles peuvent ainsi provoquer des hyperleucocytoses chroniques.

L'invention a pour but de résoudre simultanément ces trois questions : (i) la texturation du substitut végétal du yaourt sans avoir à ajouter des texturants exogènes.- il est notamment capital pour les personnes allergiques de se fournir en aliments limitant les contaminations croisées, et donc les plus simples possibles en terme d'ingrédients. ,(ii) la diminution de la proportion de céréales ou de graines cuites dans l'alimentation et l'amélioration de leur digestion et (iii) la possibilité de faire un véritable substitut du yaourt, exempt de lactose, uniquement par fermentation de graines autre que le soja, dont on sait aujourd'hui qu'il contient des composés proches des hormones sexuelles.

Le procédé de fabrication est le suivant:
Dans une première étape on réalise une suspension de poudre de graine dans l'eau: les graines utilisables sont de façon non exhaustives: le riz, le sarrasin, le millet, le maïs, l'épeautre, l'amaranthe, le quinoa, le blé, l'orge, le seigle, la chataîgne, la noix de coco...
deux procédés sont possibles pour réaliser la suspension de poudre de graine dans l'eau:
   Dans le premier procédé possible, on réalise un mélange de graines entières ou décortiquées avec de l'eau dont l'eau est à la température minimale de 1 °C et maximale de 100°C plus favorablement 20°C et dans lequel le rapport eau/graine s'échelonne de 1 à 9 et plus favorablement à 3 est préparé. Les graines entières ou décortiquées peuvent éventuellement être immergées une nuit dans l'eau prélalablement avant l'étape suivante: les graines ainsi immergées sont pulvérisées à l'aide d'un mixer dont l'hélice tourne au minimum à 1000 tours/minute et plus favorablement à 5000 tours /minute, pendant au moins une minute et plus favorablement pendant 5 minutes, de façon à obtenir une suspension de poudre de graine dans l'eau. D'autres matériels peuvent être utilisés pour pulvériser ces graines dans l'eau: un blender par exemple.
   Dans le second procédé possible pour réaliser le première étape,on part de farine de la graine sélectionnée que l'on suspend dans l'eau dans un rapport eau/graine de 1 à 9 et plus favorablement à 3.
Dans une deuxième étape, on réalise la pasteurisation de la suspension et la gélatinisation partielle des grains d'amidon:
   La suspension homogène précedemment réalisée est portée sous agitation à une température de 55°C minimum et 100°C maximum, et plus favorablement à 65 °C pendant au minimum 5 minutes au maximum 2 heures, plus favorablement 30 minutes.

On obtient ainsi par l'un de ces procédés ce qu'on peut appeler une "crème", lisse et onctueuse. La crème obtenue contient une proportion résiduelle d' éléments natifs de la graine crue allant de 5 à 80%, ce qui rend le produit final à la fois plus digeste, du fait de la diminution de l'hyperleucocytose, et également plus intéressant sur le plan nutritionnel car plus riche en vitamines.

Le pH de la "crème" est situé entre 6 et 8, plus couramment à 7.

Dans une troisième étape on réalise facultativement l'hydrolyse ménagée de l'amidon présent dans la "crème" : en vue de rendre la "crème" précédemment obtenue, fermentescible par les bactéries lactiques, il peut être procédé à une hydrolyse partielle de 10 à 20 % de l'amidon par l'action amylasique du malt de la même espèce végétale que celle servant dans la formulation (si on fait un substitut de yaourt à l'aide de riz, on utilise du malt de riz). Cette étape est cependant rendue facultative lorsque des bactéries lactiques amylolytiques sont employées -voir cinquième étape-, ce qui est le cas le plus favorable , pour des raisons de simplicité du procédé. L'action amylasique ménagée, soit des amylases du malt de la même espèce végétale, soit des bactéries lactiques amylolytiques a une action favorable sur la texture, la rendant très lisse en bouche. Le goût est également amélioré par l'hydrolyse, devenant très doux, très légèrement sucré. Dans une quatrième étape on réalise l'ensemencement par les bactéries lactiques: la "crème" préalablement obtenue est refroidie à une température comprise entre 20°C et 45 °C, plus favorablement 37°C.

L'ensemencement est alors réalisé à partir d'une suspension mère de concentration 10□ à 10□ bactéries / ml pour obtenir un taux d'ensemencement de 10□ à 10□ bactéries / ml et plus favorablement 10□ bacteries/ml.

On peut également partir d'un lyophilisat, couramment commercialisé par les sociétés produisant des levains. Le taux d'ensemencement de la "crème" est de 10□ à 10□ bactéries / ml et plus favorablement 10□ bacteries/ml.

Dans une cinquième étape appelée fermentation, la population de bactéries lactiques préalablement sélectionnées pour assurer une croissance efficace sur le milieu "crème" (amylolytiques, et ou métabolisant le maltose) ainsi que pour la production d'exopolysaccharides, utilisées en souche pure ou en mélange, est incubée à une température entre 20°C et 45°C pendant au moins 1 heure et moins de 24 h, plus favorablement 3h. Cette population augmente suffisamment pour que la production d'acide lactique abaisse le pH à une valeur inférieure 4.5 en moins de 12 heures. La population de bactérie lactique dans le substitut de yaourt ainsi réalisé est alors de 10□ à 10¹⁰ cellules vivantes par milliLitre. On peut choisir avanatgeusement le mélange de souches de façon à combiner une souche amylolytique et une souche utilisatrice du maltose et productrice d'exopolysaccharides texturants. L'usage de souches productrices d'enzymes,par exemple d' amylases, a pour effet de garantir une activité enzymatique dans le produit fini, ce qui améliore sa digestibilité. En effet on montre que les aliments riches en enzymes sont mieux digérés que les aliments privés d'activité enzymatique.

Afin de minimiser les transferts de matière pendant les étapes de la transformation et de facilter la fabrication du produit, ceci principalement dans le but garantir l'absence de contamination croisée, une solution a été de concevoir une machine a été spécialement adaptée à cette question.. Elle réalise les opérations nécessaires à l'obtention du substitut du yaourt, selon le procédé décrit ci dessus, Elle a été conçue sous deux versions: l'une , la version(a), permet de partir de farine issu de graine, l'autre , la version (b), permettant de partir de graines entières

Cette machine, dans chacune de ses deux versions, se présente sous une forme particulièrement compacte et hermétique, ce qui permet de fabriquer en minimisant les contacts avec les contaminants extérieurs.. Elle est concue pour fonctionner à trois échelles de fabrication:
A l'échelle intermédiaire, de 10 litres à 100 litres , préférentiellement 30 litres elle reste facilement transportable,et peut donc être installée et utilisée pour un usage artisanal, par exemple dans un point de vente alimentaire, tel qu'une boulangerie , ou un restaurant.

Elle peut également être construite à une petite échelle, de 0,5 à 5 litres , préferentiellement 2 litres, afin d' être utilisée dans une cuisine domestique.

A l'autre extrème de l'échelle, de 100 litres à 10000 litres préférentiellement 1000 litres, .elle peut également permettre la fabrication de yaourt dans un usage industriel.

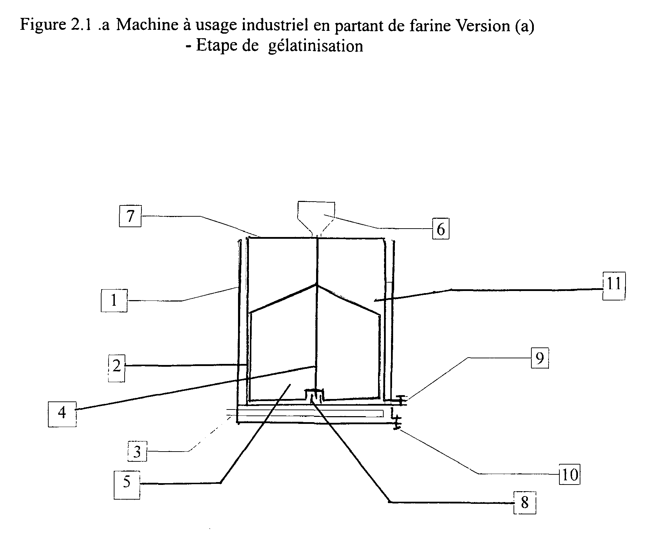

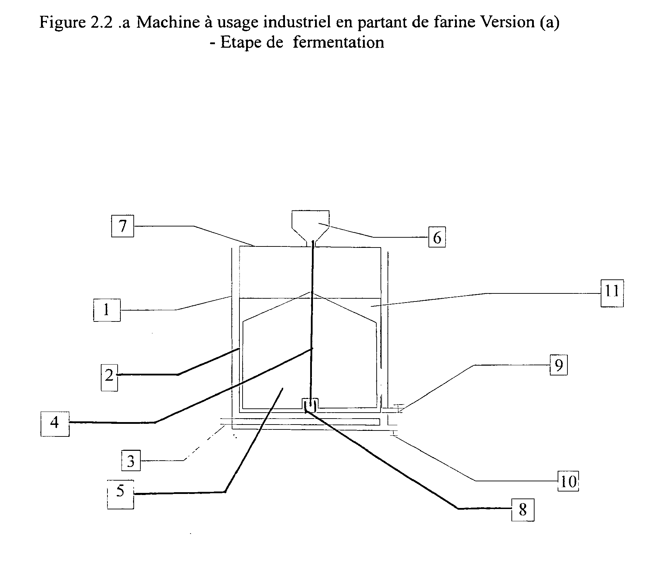

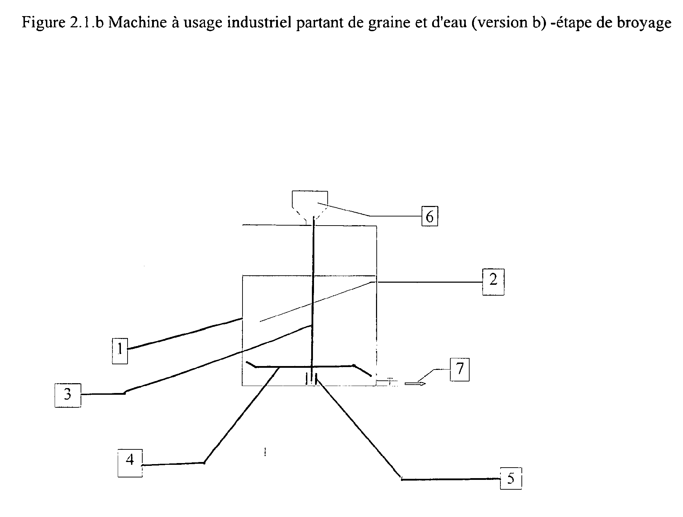

Les 3 échelles des deux versions (a) et (b) sont décrites sur les figures :
- machines d'échelle moyenne pour usage artisanal
   ;version a: 1.1.a ; 1.2a, 1.3a
   version b : 1.1.b :
- les figures sont identiques pour la machine de petite échelle à usage domestique;
- machine de grande échelle pour usage industriel,
   version a: figures 2.1.a, 2.2.a,
   version b: figures 2.1.b

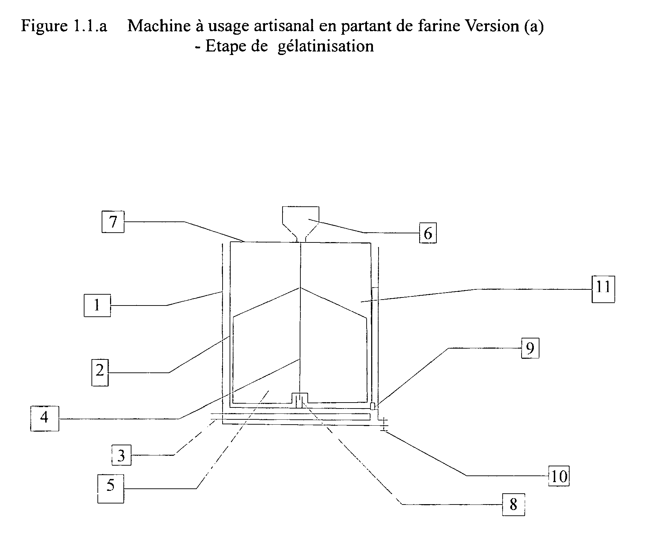

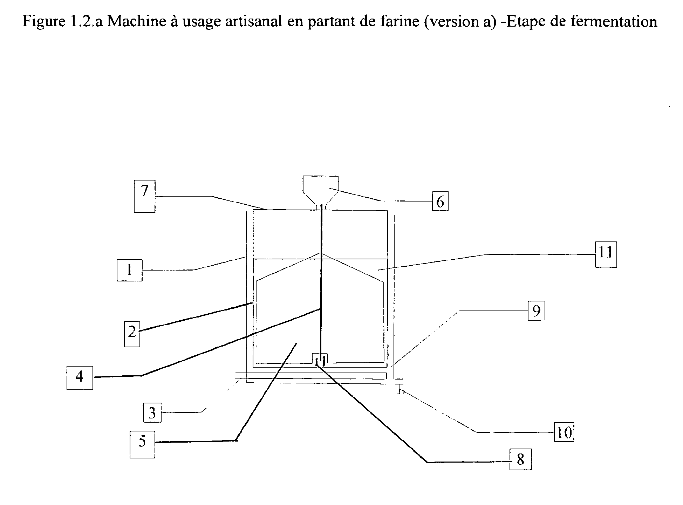

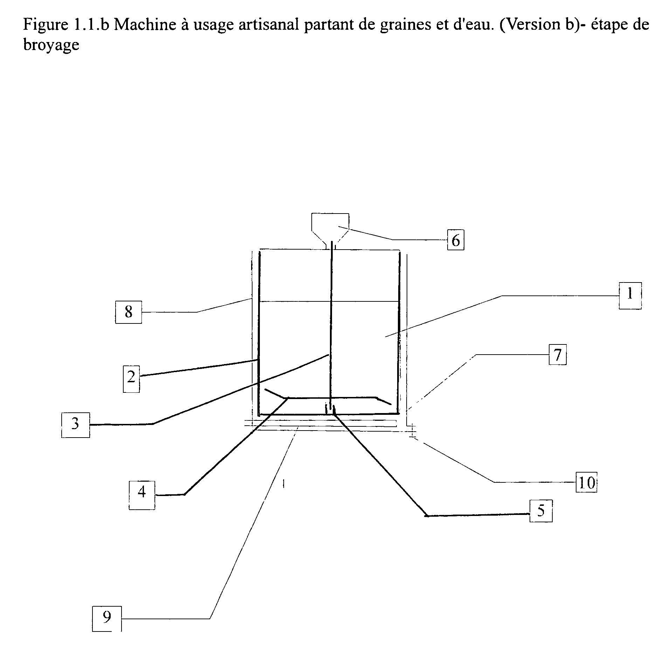

### Description de la machine à usage artisanal version (a): en partant de farine et d'eau comme matière première.(figures 1.1.a, 1.2.a, 1.3.a)

En ce qui concerne la machine à 'usage artisanal, elle est constituée de deux cuves, l'une externe (figure 1.1.a légende1), l'autre , interne (figure 1.1.a légende 2): la première, la cuve externe, est équipée d'un thermoplongeur (figure 1.1.a légende 3) et sert donc de bain-marie à la seconde, la cuve interne. La cuve interne s'enchasse dans la cuve externe. Elle est équipée d'un mélangeur/agitateur axial vertical (figure 1.1.a légendes 4 et 5) mû par un moteur (figure 1.1.a légende 6), fixé sur le couvercle (figure 1.1.a légende 7) placé au dessus de la cuve interne. Ce moteur peut être doté d'un réducteur et d'un variateur de vitesse. L'axe 4 est maintenu dans sa partie inférieure par un receptacle fixé en fond de cuve interne ( figure 1.1.a légende 8). La cuve interne est également équipée en fond de cuve d'un filetage fermé par un boulon ((figure .1.1.a légende 9). La cuve externe est également équipée d'une vanne permettant d'introduire de l'eau ou de la vidanger.(figure 1.1.a légende 10).

### Voici le déroulement des étapes dans cette version de la machine

Etape de gélatinisation: pendant la première partie du procédé, le mélange eau farine (figure 1.1.a -légende 11) situé dans la cuve interne est porté à la température de gélatinisation, ceci sous agitation préferentiellement d'abord rapide, puis lente, afin d'obtenir une crème lisse et onctueuse.

Le refroidissement peut se faire sous l'effet de la circulation d'eau froide ou sans action particulière,
Etape de fermentation: lorsque le refroidissement est suffisant, les bactéries sont ajoutées dans la "crême" toujours située dans la cuve interne.

Une particularité possible de la cuve externe tient à ce qu' elle peut -être facilement vidangée de son eau (1.2.a légende 10). Ceci est très utile pour la deuxième étape, la fermentation: En effet, elle sert alors de paroi de réflexion aux rayons émanant de la cuve interne, ce qui garantit le maintient de la température nécessaire à la fermentation sans aucun apport supplémentaire d'énergie. Dans ce cas, la machine est très peu consommatrice en énergie.

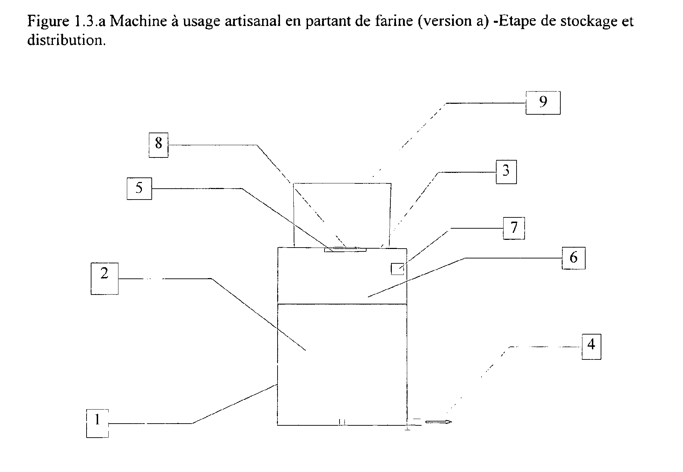

Etape de stockage et distribution:. Dans le cas des machines à usage artisanal, la cuve inteme(figure 1.3.a légende 1)contenant le substitut végétal de yaourt (figure 1.3.a légende 2) est extraite de la cuve externe et son couvercle , le moteur ainsi que le mélangeur/agitateur sont remplacés par un couvercle hermétique clipsable pour expédition (figure 1.3.a légende 3) et la cuve est alors mise à disposition dans le magasin de vente. Une pompe (figure 1.3.a légende 4)est alors fixée sur le filetage présent au fond de ladite cuve pour permettre la distribution des pots que les clients apportent ou qu'ils achètent. Cette méthode de distribution favorise le réemploi des emballages.Une soupape ventouse (figure 1.3.a légende 5) )permet de casser le vide lors du pompage. La conservation du produit peut se faire dans cette cuve à température ambiante. La conservation est alors garantie par la présence dans la cuve au dessus du yaourt, d' une atmosphère riche en dioxyde de carbone et pauvre en oxygène, dite atmosphère modifiée (figure 1.3.a légende 6) obtenue soit par la mise sous pression partielle de dioxyde de carbone par une le biais d'une bombone soit par l'utilisation d'un absorbeur d'oxygène de type ATCO (société STANDA) ou par tout autre moyen utile à cette fin. D'autres gaz inhibiteurs des micro-organismes aérobies sont imaginables, tels que des gaz inertes par exemple.

Une autre technique consiste à employer une culture de micro-organismes (figure 1.3.a légende 7) producteurs de gaz inhibiteur d'espèces aérobies (comme par exemple les levures , les leuconostoc) et qui, placée dans l'espace entre la surface du produit et le couvercle de la bonbonne, sature ainsi avec du dioxyde de carbone l'atmosphère en contact avec la surface du produit et garantit sa protection contre toute espèce aérobie, telles que par exemple les moisissures (exemple genre penicillium), les levures (exemple genre rhodoturella), les bactéries sporulées (par exemple, l'espèce bacillus cereus). Afin d'éviter l'entrée de microorganismes lors du pompage, un filtre de diamètre inférieur à 1 micromètre est placé entre l'atmosphère ambiante et la soupape(figure 1.3.a légende 8). Pour être facilement transportée la cuve est équipée d'une poignée (figure 1.3.a légende 9). On comprend que ce mode de stockage et de distribution permet de minimiser encore davantage les risques de contamination du produit par des molécules exogènes.

### Description de la machine à usage artisanal version (b): en partant de graine et d'eau comme matière première.(figure 1.1.b)

Le broyage des graines dans l'eau (figure 1.1 b légende 1) se fait dans la cuve interne précédemment décrite dans la version (a) de la machine (voit figure 1.1.a). La cuve interne (figure 1.1 b légende 2) est alors dotée d'un axe (figure 1.1 b légende 3) équipé d'un broyeur (figure 1.1 b légende 4)maintenu en fond de cuve par un receptacle (figure 1.1 b légende 5), et mû par un moteur tournant à plus de 1000 tours minutes (figure 1.1 b légende 6). La cuve interne est également équipée en fond de cuve d'un filetage fermé par un boulon (figure .1.1.b légende 7). L'ensemble de la cuve interne est enchassé dans la cuve externe (figure 1.1.b légende 8) équipée d'un thermoplongeur (figure .1.1.b légende 9) et d'une vanne permettant l'entrée ou le soutirage de l'eau (figure .1.1.b légende 10).

Les opérations suivantes, gélatinisation, fermentation, stockage et distribution ont lieu dans la cuve où le broyage a eu lieu. On substituel'outil de mélange. seulement à l'outil de broyage, Les opérations sont identiques à celles décrites dans la précédente partie "Description de la machine à usage artisanal version (a): en partant de farine et d'eau comme matière première.(figures 1.1.a, 1.2.a, 1.3.a)" Dans le cas de la machine à usage domestique, le principe est le même à celui décrit précedemment. Seule, la taille des cuves est changée. Après la fermentation, on remplace le dispositif d'agitation relié au couvercle, par un couvercle hermétique, équipé, par exemple d'un dispositif de pompage manuel ou plus sophistiqué, ce qui permet une distribution aisée du produit.

Dans le cas des machines à usage artisanal et à usage domestique, et concernant la conservation du produit,, la cuve dite "interne" qui sert de alors cuve de stockage et de distribution peut être aussi refroidie par n'importe quel moyen convenant à ce but.

### Description de la machine à usage industrielle version (a): en partant de farine et d'eau comme matière première.(figures 2.1.a, 2.2.a,)

Cette version est constituée de deux cuves, l'une externe (figure 2.1.a légende1), l'autre , interne (figure 2.1.a légende 2): la première, la cuve externe, est équipée d'un thermoplongeur (figure 2.1.a légende 3) et sert donc de bain-marie à la seconde, la cuve interne. La cuve interne s'enchasse dans la cuve externe. Elle est équipée d'un mélangeur/agitateur axial vertical (figure 2.1.a légendes 4 et 5) mû par un moteur (figure 2.1.a légende 6), fixé sur le couvercle (figure 2.1.a légende 7) placé au dessus de la cuve interne. Ce moteur peut être doté d'un réducteur et d'un variateur de vitesse. L'axe 4 est maintenu dans sa partie inférieure par un receptacle fixé en fond de cuve interne ( figure 2.1.a légende 8). La cuve interne est également équipée en fond de cuve d'un vanne (figure .2.1.a légende 9). La cuve externe est également équipée d'une vanne permettant d'introduire de l'eau ou de la vidanger.(figure 2.1.a légende 10).

Etape de gélatinisation: pendant la première partie du procédé, le mélange eau farine (figure 2.1.a -légende 11) situé dans la cuve interne est porté à la température de gélatinisation, ceci sous agitation préferentiellement d'abord rapide, puis lente, afin d'obtenir une crème lisse et onctueuse.

Le refroidissement peut se faire sous l'effet de la circulation d'eau froide ou sans action particulière,

Etape de fermentation: lorsque le refroidissement est suffisant, les bactéries sont ajoutées dans la "crême" toujours située dans la cuve interne.

Une particularité possible de la cuve externe tient à ce qu' elle peut -être facilement vidangée de son eau (2.2.a légende 10). Ceci est très utile pour la deuxième étape, la fermentation: En effet, elle sert alors de paroi de réflexion aux rayons émanant de la cuve interne, ce qui garantit le maintient de la température nécessaire à la fermentation sans aucun apport supplémentaire d'énergie. Dans ce cas, la machine est très peu consommatrice en énergie.

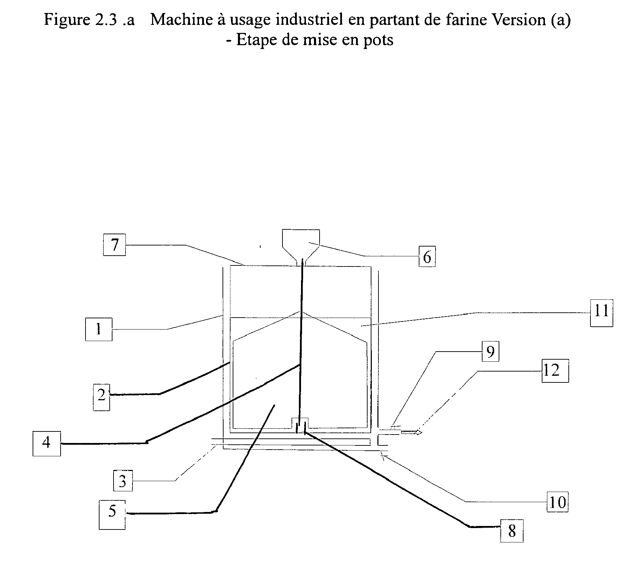

Etape de mise en pot: une pompe , ( figure 2.3.a) permet d'extraire le yaourt de la cuve interne et de le distribuer dans les pots. Cette pompe peut avantageusement être une pompe à piston.

Description de la machine à usage industriel version (b): en partant de graines et d'eau comme matière première.. Dans ce cas , il existe, en amont du procédé décrit précédemment (version a) une cuve dite " de préparation de la suspension à gélatiniser " (figure 2.1.b légende 1), cuve où les graines sont trempées dans leur volume d'eau ou davantage (figure 2.1.b légende 2) t sont broyées très finement puis dispersées par un broyeur (figure 2.1.b légende 3) stué en fond de cuve ou en disposition verticale sur un axe maintenu par un réceptacle (figure 2.1.b légende 4 relié à un moteur (figure 2.1.b légende 5) fixé sur le couvercle de la cuve.. Le broyat est évacué vers la cuve de gélatinisatin par une pompe (figure 2.1.b légende 6). Tout autre moyen de broyage peut être cependant utilisé, même continu.

La suite du procédé est identique aux opératrions décrites dans les étapes: gélatinisation/ fermentation et stockage de la version (a) de la machine (figures 2.1.a, 2.2.a, 2.3.a).

Dans le cas où l'on souhaite fabriquer une glace à partir du substitut de yaourt, le produit est par exemple passé sur un échangeur à surface raclée négative, foisonné puis extrudé, où dans tout autre type de machine à fabriquer de la crème glacée. Dans le cas de la version domestique, une sorbetière domestique ou une turbine à glace peuvent également être employées en complément du module prinipal (étape de gélatinisation/fermentation) décrit ci dessus.

Ces machines présentent l'avantage de limiter le contact des matières transformées avec l'air ambiant, de limiter le nombre d'opération et de transfert de matière et donc d'atteindre le but recherché par l'invention, c'est à dire la fabrication d'un produit le moins contaminé par des ingrédients exogènes.

Les machines peuvent être équipées de programmateurs qui rendent automatiques les opérations de broyage, de cuisson, de mélange pendant la fermentation. Ainsi, les machines sont utilisables par des personnes n'ayant pas de connaissance précise du procédé ou de la fermentation

La conservation du substitut végétal du yaourt peut s"effectuer en conditions réfrigérée , traditionnellement 4 °C. Elle peut également être réalisée à température ambiante, grâce(i) au pH acide qui caractérise le produit et (ii) à la protection de la surface du produit en contact avec l'air. Dans le cas de la conservation du produit à température ambiante, la protection de la surface du produit en contact avec l'air est réalisée soit (i) par les techniques d'atmosphère controlée obtenue grâce à un absorbeur d'oxygène ou à l"injection d'un gaz inerte ou protecteur, technique adaptée aux bonbonnes soit (ii) en ce qui concerne les pots de verre par la stérilisation de la surface du produit et de l'air ambiant contenu dans le pot par stérilisation de la surface externe du couvercle, le pot étant maintenu en position inversé pendant cette opération. Grâce à cette technique, le pot de yaourt ainsi obtenu peut se conserver au minimum 8 jours à température ambiante, et ceci jusqu'à un an, plus favorablement deux mois.

Les possibiltés qu'offre ce produit vivant d'être conservé à température ambiante , soit autour de 20°C est un avantage considérable.

Exemple 1. On part de farine de sarrasin toastée. on mélange 25 grammes de sarrasin et 75 grammes d'eau. La suspension ainsi réalisée est montée à une température moyenne de 67°C pendant 30 minutes et stabilisée à 37°C. Elle est ensemencée à un niveau d'ensemencement de 10□ bactéries/mL. Les espèces choisies sont *Lactobacillus acidophilus,* souche amylolytique et *Lactobacillus delbriecki subsp lactis* souche productrice d'exopolysaccharides en mélange 50/50. Après 8 heures à 37°C, le pH est passé d'une valeur de 6.5 à une valeur de 4,2.

Exemple 2. On utilise du riz blanc, pax exemple basmati comme graine pour la réalisation du substitut de yaourt. on mélange 25 grammes de riz et 75 grammes d'eau. Le riz est trempé 2 heures à température ambiante. Le mélange est alors passé au blender à la vitesse de 3500 tours / minutes pendant 5 minutes. La suspension ainsi réalisée est montée à une température moyenne de 63°C pendant 30 minutes et stabilisée à 37°C. Pour la fermentation, on utilise une souche de *Lactobacillus acidophilus* amylolytique ensemencée à un niveau de 10□ bactéries/mL. L'incubation à la température de 37°C permet l'acidification de la "crème" à pH 4 en moins de 3 heures. Le produit obtenu a le goût, la couleur et la consistance d'un yaourt brassé nature. Il s'agit donc d'un substitut de yaourt intégralement base de graine de riz, exempt de tout gélifiant d'origine exogène à cette espèce.

Le procédé et le produit visés par l'invention sont particulièrement adaptés aux personnes souffrant d'allergie au lait et au gluten, recherchant des produits les plus simples possibles, garantissant ainsi l'absence de contamination croisée d'allergènes. Ainsi, les ingrédients figurant sur l'étiquette du produit visé par l'exemple 1 sont: eau, farine de sarrasin, ferments lactiques.

Exemple 3; On part de graines de riz , et en utilisant la version (b) de la machine à usage artisanal et reprenant les éléments de la recette décrit dans l'exemple 1, on fabrique 30 litres de yaourts en bonbonne, sans que les ingrédients n'aient subi aucun transfert.

Exemple 4: En reprenant le produit fabriqué dans l'exemple 1 et en utilisant une machine à usage artisanal, on fabrique , grâce une machine à crème glacée artisanale, une glace au yaourt végétal exempte de matière grasse et de lactose.

## Revendications

1. Procédé permettant la fabrication d'un substitut de yaourt, réalisé intégralement et exclusivement à base de graines à l'exclusion du soja , d'eau, et de bactéries lactiques, **caractérisé en ce qu'il** présente , après mélange de l'eau et des graines, un broyage des graines dans l'eau, suivi d'une étape de gélatinisation de l'amidon texturante par élévation de la température , d'un réglage de température, d'un ensemencement par des bactéries lactiques préalablement sélectionnées pour assurer une croissance efficace sur ce milieu et d'une acidification et texturation par voie fermentaire, ledit procédé garantissant ainsi l'absence de contamination croisée d'allergènes dans le produit ainsi obtenu

2. Procédé permettant la fabrication d'un substitut de yaourt, réalisé intégralement et exclusivement à base de farine de graines , d'eau, et de bactéries lactiques, **caractérisé en ce qu'il** présente une étape de gélatinisation de l'amidon par élévation de la température, suivie d'un réglage de température, d'un ensemencement par des bactéries lactiques préalablement sélectionnées pour assurer une croissance efficace sur ce milieu et d'une acidification et texturation par voie fermentaire, ledit procédé garantissant ainsi l'absence de contamination croisée d'allergènes dans le produit ainsi obtenu

3. Procédé selon la revendication 1 ou 2 **caractérisé en ce que** le substitut végétal du yaourt ainsi obtenu contient (ii) une proportion de composés natifs de la graine crue et (iii) une activité enzymatique digestive.

4. Procédé selon la revendication 1 ou 2 **caractérisé en ce que** du malt dérivant de la même espèce que la graine employée pour fabriquer le substitut de yaourt peut-être ajouté à la formulation afin de faciliter la fermentation.

5. Procédé selon la revendication 1 ou 2 **caractérisé en ce que** des souches de bactéries lactiques productrices d'exopolysacharides peuvent être employées pour texturer le produit ainsi obtenu.

6. Procédé selon l'une quelconque des précédentes revendications **caractérisé en ce que** le substitut végétal du yaourt ainsi obtenu peut être conservé au moins huit jours, au maximum un an ambiante à température , soit à une température moyenne de vingt degrés Celsius.

7. Procédé selon l'une quelconque des précédentes revendications **caractérisé en ce que** le produit peut-être conservé et distribué en bonbonne.

8. Procédé selon l'une quelconque des précédente revendications **caractérisé en ce qu'**une méthode de protection du produit pendant sa conservation consiste à placer dans l'interstice entre la surface du produit et le couvercle, une culture de microorganismes produisant du dioxyde de carbone.

9. Procédé selon l'une quelconque des précédentes revendications **caractérisé en ce que** le substitut végétal de yaourt peut être utilisé comme boisson, sauce, glace, crème glacée ou comme tout autre ingrédient alimentaire.

10. machine de fabrication du substitut végétal du yaourt, mettant en oeuvre les étapes du procédé selon l'une quelconque des revendications précédentes **caractérisée en ce qu'**elle est compacte, automatisable, qu'elle permet de produire le substitut végétal de yaourt en un nombre réduit d'opérations et de transferts de matière, et qu'elle comprend (i) une cuve externe équipée d' un thermoplongeur ou de tout autre moyen de chauffage de l'eau, également équipée de vannes de vidange ou remplissage, (ii) une cuve interne équipée de broyeur, mélangeur, de couvercles adaptés à la pose de moteur ou engrenage actionnant le broyeur et le mélangeur , de système de conservation du produit tel que filtres bactérien , soupape, absorbeur d'oxygène, d'une vanne de pied de cuve, éventuellement d'une pompe d'extraction du substitut végétal du yaourt
